(19) Europäisches Patentamt
European Patent Office
Office européen des brevets

(11) EP 4 753 001 A1

(12) EUROPEAN PATENT APPLICATION
published in accordance with Art. 153(4) EPC

(43) Date of publication:
**03.06.2026 Bulletin 2026/23**

(21) Application number: **24863101.2**

(22) Date of filing: **27.08.2024**

(51) International Patent Classification (IPC):
***H01M 10/052*** (2010.01) ***H01M 4/525*** (2010.01)
***H01M 4/505*** (2010.01) ***H01M 10/0567*** (2010.01)
***H01M 4/02*** (2006.01)

(52) Cooperative Patent Classification (CPC):
**H01M 4/02; H01M 4/505; H01M 4/525;
H01M 10/052; H01M 10/0567;** Y02E 60/10

(86) International application number:
**PCT/KR2024/012740**

(87) International publication number:
**WO 2025/053520 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 KR 20230118665**

(71) Applicant: **LG Energy Solution, Ltd.
Seoul 07335 (KR)**

(72) Inventors:
- **KO, Jin Hyuck
Daejeon 34122 (KR)**
- **LEE, Chul Haeng
Daejeon 34122 (KR)**
- **LEE, Jung Min
Daejeon 34122 (KR)**
- **JI, Su Hyeon
Daejeon 34122 (KR)**

(74) Representative: **Hoffmann Eitle
Patent- und Rechtsanwälte PartmbB
Arabellastraße 30
81925 München (DE)**

# (54) LITHIUM SECONDARY BATTERY

(57) The present invention relates to a lithium secondary battery including a positive electrode; a negative electrode facing the positive electrode; a separator disposed between the positive electrode and the negative electrode; and a non-aqueous electrolyte, wherein the positive electrode includes a positive electrode active material, the positive electrode active material includes a lithium nickel-based oxide particle represented by Formula A, the lithium nickel-based oxide particle is in a form of a single particle composed of one single nodule or a pseudo-single particle that is a composite of 30 or less nodules, and the non-aqueous electrolyte includes a lithium salt, an organic solvent, and an additive, wherein the additive includes a cyclic borate-based compound represented by Formula 1 and a compound containing a propargyl group.

[Formula A] $Li_aNi_bCo_cMn_dM^1{}_eO_2$

In Formula A, $M^1$ is at least one selected from the group consisting of Ti, Mg, Al, Zr, Y, Ba, Ca, Sr, W, Ta, Nb, and Mo, and $0.8 \leq a \leq 1.2$, $0.5 \leq b < 0.7$, $0 < c < 0.2$, $0 < d \leq 0.4$, $0 \leq e \leq 0.2$, and $b+c+d+e=1$.

EP 4 753 001 A1

## Description

## TECHNICAL FIELD

### Cross-reference to Related Applications

This application claims priority from Korean Patent Application No. 10-2023-0118665, filed on September 6, 2023, the disclosure of which is incorporated by reference herein.

### Technical Field

The present invention relates to a lithium secondary battery.

## BACKGROUND ART

Recently, demand for a secondary battery having high stability as well as high capacity and high output is increasing as an application area of lithium secondary batteries is rapidly expanding not only to electricity, electronics, communication, and power supply of electronic devices such as computers, but also to power storage supply of automobiles or large-area devices such as power storage devices.

Particularly, high capacity, high output, and long-term life characteristics are becoming important in lithium secondary batteries for automotive applications. In order to increase capacity of the secondary battery, a nickel-rich positive electrode active material having high energy density but low stability may be used, or the secondary battery may be operated at high voltage.

The lithium secondary battery is largely composed of a positive electrode that is composed of a composite transition metal oxide containing lithium, a negative electrode capable of storing lithium, an electrolyte that becomes a medium for transferring lithium ions, and a separator.

With respect to a conventionally developed positive electrode active material in a form of a single particle, since it has higher particle strength than a conventional positive electrode active material in a form of a secondary particle, it is advantageous in that life characteristics are excellent due to less particle breakage, but since interfaces between primary particles, which become diffusion paths for lithium ions in the particle, are less, lithium mobility is reduced, and thus, there is a problem in that capacity characteristics are degraded in comparison to the positive electrode active material in the form of a secondary particle.

One way to increase capacity is to increase an operating voltage, but when the operating voltage of NCM-based lithium composite transition metal oxide is 4.3 V or more, particularly, 4.35 V or more, a side reaction with an electrolyte solution becomes severe, and battery performance may be rapidly degraded due to dissolution of transition metal ions.

Particularly, transition metal ions may be dissolved from a surface of the positive electrode while an electrode surface structure or a film formed on a surface of the positive or negative electrode is degraded due to the side reaction of the electrolyte. In this case, there occurs a problem in that the dissolved transition metal ions degrade passivation ability of a solid electrolyte interface (SEI) layer while being electro-deposited on the surface of the negative electrode, and reduce electrochemical stability of thepositive electrode.

Such a degradation phenomenon of the secondary battery tends to be further accelerated when a potential of the positive electrode is increased or when the battery is exposed to high temperatures, and the degradation phenomenon causes a problem in which capacity and cycle characteristics of the secondary battery are degraded.

Thus, in order to enable stable operation at high voltage, there is a need to develop an additive which may form a uniform film on the positive electrode and/or the negative electrode in an initial formation process so as to suppress the dissolution of the metal ions from the positive electrode.

## DISCLOSURE OF THE INVENTION

## TECHNICAL PROBLEM

An aspect of the present invention provides a lithium secondary battery in which high-temperature storage characteristics and high-temperature life characteristics at high voltage are excellent by including a non-aqueous electrolyte additive capable of forming a uniform and highly durable film on a surface of a positive electrode while using a lithium nickel-based oxide particle in a form of a single particle or a pseudo-single particle as a positive electrode active material.

**TECHNICAL SOLUTION**

[1] The present invention provides a lithium secondary battery including: a positive electrode; a negative electrode facing the positive electrode; a separator disposed between the positive electrode and the negative electrode; and a non-aqueous electrolyte, wherein the positive electrode includes a positive electrode active material, the positive electrode active material includes a lithium nickel-based oxide particle represented by Formula A, the lithium nickel-based oxide particle is in a form of a single particle composed of one single nodule or a pseudo-single particle that is a composite of 30 or less nodules, and the non-aqueous electrolyte includes a lithium salt, an organic solvent, and an additive, wherein the additive includes a cyclic borate-based compound represented by Formula 1; and a compound containing a propargyl group.

[Formula A] $Li_aNi_bCo_cMn_eM^1{}_eO_2$

In Formula A, $M^1$ is at least one selected from the group consisting of titanium (Ti), magnesium (Mg), aluminum (Al), zirconium (Zr), yttrium (Y), barium (Ba), calcium (Ca), strontium (Sr), tungsten (W), tantalum (Ta), niobium (Nb), and molybdenum (Mo), and $0.8 \leq a \leq 1.2$, $0.5 \leq b < 0.7$, $0 < c < 0.2$, $0 < d \leq 0.4$, $0 \leq e \leq 0.2$, and $b+c+d+e=1$, and

[Formula 1]

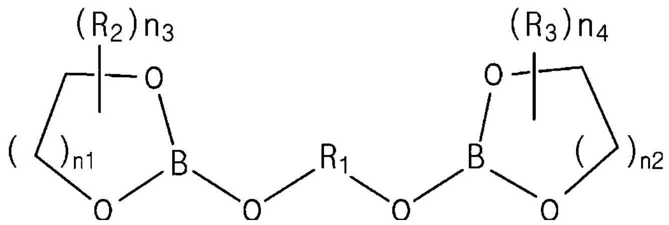

In Formula 1, $R_1$ is an alkylene group having 1 to 10 carbon atoms, $n_1$ and $n_2$ are each independently an integer selected from 0 to 5, $R_2$ and $R_3$ are each independently hydrogen, halogen, a nitrile group, an ester group, an ether group, a ketone group, a carboxyl group, an unsubstituted or substituted alkyl group, an unsubstituted or substituted alkenyl group, an unsubstituted or substituted alkynyl group, an unsubstituted or substituted alkoxy group, a boron group, a borate group, an isocyanate group, an isothiocyanate group, a silyl group, a siloxane group, a sulfone group, a sulfonate group, a sulfate group, or a combination of two or more thereof, $n_3$ is $2n_1 + 2$, $n_4$ is $2n_2 +2$, when $n_3$ is an integer of 2 or more, a plurality of $R_2$s may be the same or different from each other, and, when $n_4$ is an integer of 2 or more, a plurality of $R_3$s may be the same or different from each other.

[2] The present invention provides the lithium secondary battery of [1] above, wherein b/c of Formula A may be in a range of 3.2 to 9.0.

[3] The present invention provides the lithium secondary battery of [1]or [2] above, wherein b/d of Formula A may be in a range of 1.5 to 2.8.

[4] The present invention provides the lithium secondary battery of at least one of [1] to [3] above, wherein Formula A may be represented by Formula A-1.

[Formula A-1] $Li_aNi_bCo_cMn_dM^1{}_eO_2$

In Formula A-1, $M^1$ is at least one selected from the group consisting of Ti, Mg, Al, Zr, Y, Ba, Ca, Sr, W, Ta, Nb, and Mo, and $0.8 \leq a \leq 1.2$, $0.55 \leq b \leq 0.65$, $0 < c \leq 0.15$, $0.2 < d \leq 0.4$, $0 \leq e \leq 0.1$, $3.2 \leq b/c \leq 9.0$, $1.5 \leq b/d \leq 2.8$, and $b+c+d+e=1$.

[5] The present invention provides the lithium secondary battery of at least one of [1] to [4] above, wherein the compound represented by Formula 1 may be a compound represented by Formula 1-1.

[Formula 1-1]

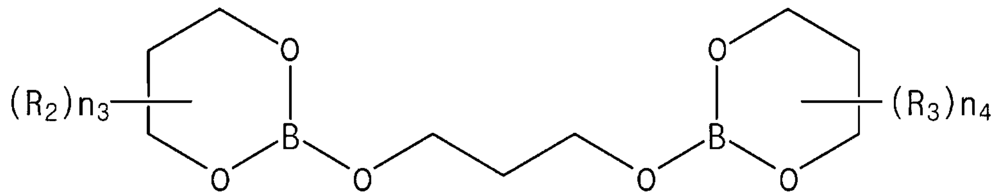

In [Formula 1-1], $R_2$ and $R_3$ are each independently as defined in [Formula 1] , $n_3$ is 6, and $n_4$ is 6.

[6] The present invention provides the lithium secondary battery of at least one of [1] to [5] above, wherein the compound represented by Formula 1 may be a compound represented by Formula 1-2.

[Formula 1-2]

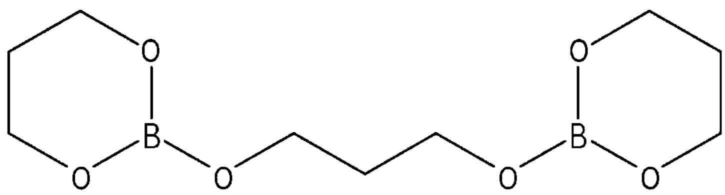

[7] The present invention provides the lithium secondary battery of at least one of [1] to [6] above, wherein the compound containing a propargyl group may include at least one selected from the group consisting of compounds represented by Formulae 2 and 3.

[Formula 2]

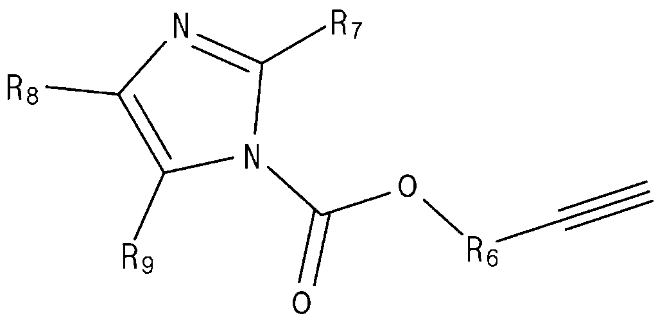

In Formula 2, $R_6$ is an alkylene group having 1 to 3 carbon atoms which may be substituted with fluorine, and $R_7$ to $R_9$ are each independently hydrogen, an alkyl group having 1 to 3 carbon atoms, a nitrile group, or a combination of two or more thereof, and

[Formula 3]

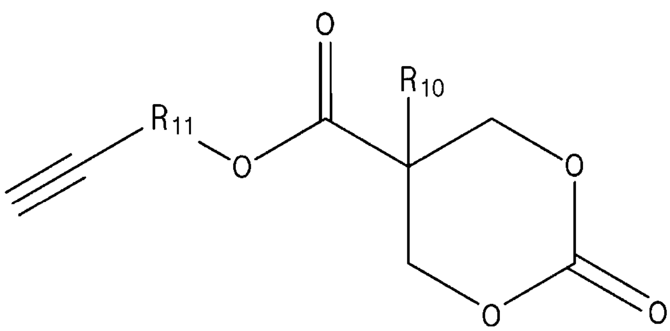

In Formula 3, $R_{10}$ is hydrogen, an alkyl group having 1 to 10 carbon atoms, a cycloalkyl group having 3 to 8 carbon atoms, or a combination of two or more thereof, and $R_{11}$ is an alkylene group having 1 to 8 carbon atoms which may be substituted with fluorine.

[8] The present invention provides the lithium secondary battery of [7] above, wherein the compound represented by Formula 2 may be represented by Formula 2-1.

[Formula 2-1]

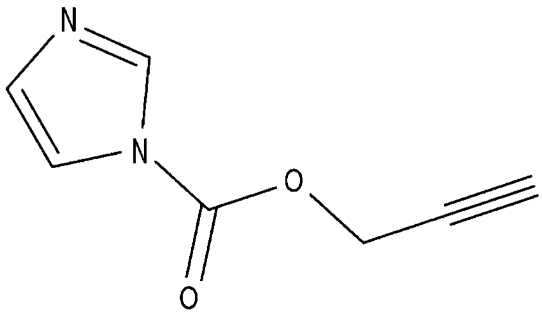

[9] The present invention provides the lithium secondary battery of [7] above, wherein the compound represented by Formula 3 may be a compound represented by Formula 3-1.

[Formula 3-1]

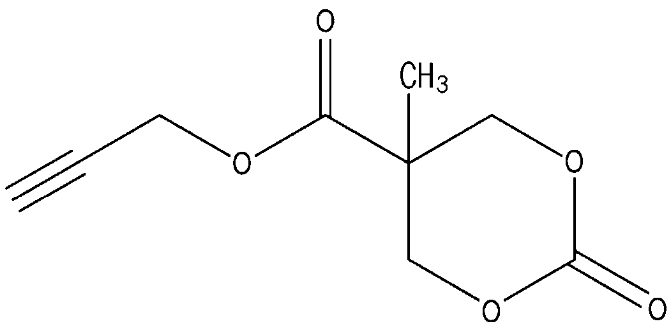

[10] The present invention provides the lithium secondary battery of at least one of [1] to [9] above, wherein the cyclic borate-based compound may be included in the non-aqueous electrolyte in an amount of 0.01 wt% to 12 wt% based on a total weight of the non-aqueous electrolyte.

[11] The present invention provides the lithium secondary battery of at least one of [1] to [10] above, wherein the compound containing a propargyl group may be included in the non-aqueous electrolyte in an amount of 0.01 wt% to 6 wt% based on the total weight of the non-aqueous electrolyte.

[12] The present invention provides the lithium secondary battery of at least one of [1] to [11] above, wherein a weight ratio of the cyclic borate-based compound to the compound containing a propargyl group may be in a range of 1:99 to 99:1.

[12] The present invention provides the lithium secondary battery of at least one of [1] to [12] above, wherein an end-of-charge voltage during operation of the lithium secondary battery may be 4.30 V or more.

## ADVANTAGEOUS EFFECTS

A lithium secondary battery according to the present invention is characterized in that it includes a positive electrode, which includes a lithium nickel-based oxide particle having a specific formula in a form of a single particle or a pseudo-single particle as a positive electrode active material, and a non-aqueous electrolyte which includes a cyclic borate-based compound having a specific structural formula and a compound containing a propargyl group as an additive.

The lithium nickel-based oxide particle is a Mid-Ni NCM-based particle having an amount of nickel among

transition metals in the particle of 50 mol% to 70 mol%, and has the form of a single particle or a pseudo-single particle. If an operating voltage is increased to increase capacity characteristics of the lithium nickel-based oxide particle, an excessive electrolyte side reaction may occur on a surface of the positive electrode, and a problem, such as desorption of the transition metals or reactive carbon, may occur. In this regard, the present invention uses the cyclic borate-based compound having a specific formula with excellent coverage capability and durability as the non-aqueous electrolyte additive, but the compound containing a propargyl group is used in combination in terms of compensating for steric hindrance due to a large molecular structure of the cyclic borate-based compound and a decrease in reactivity, wherein, accordingly, an electrode film with high coverage capability and durability may be rapidly formed on the positive electrode and negative electrode. Since the electrode film formed through the non-aqueous electrolyte additive may prevent structural collapse of the lithium nickel-based oxide particle having the above-described characteristics due to excellent uniformity and durability, a lithium secondary battery having significantly better high-temperature life performance and high-temperature storage performance particularly during high-voltage operation may be achieved.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, a "single particle" is a particle composed of one single nodule. In the present invention, a "pseudo-single particle" means a composite particle formed of 30 or less nodules.

In the present invention, a "nodule" means a particle unit body constituting the single particle and the pseudo-single particle, wherein the nodule may be a single crystal without a crystalline grain boundary, or may be a polycrystal in which grain boundaries do not exist in appearance when observed by using a scanning electron microscope (SEM) with a field of view of 5,000 times to 20,000 times. An average particle diameter of the nodule may be measured as an arithmetic average of particle diameters of nodules which are measured using a scanning electron microscope (SEM).

A "secondary particle" in the present invention means a particle formed by aggregation of a plurality, for example, tens to hundreds of primary particles. Specifically, the secondary particle is an aggregate of 40 or more primary particles.

The expression "particle" used in the present invention may include any one or all of a single particle, a pseudo-single particle, a primary particle, a nodule, and a secondary particle.

A "specific surface area" in the present invention is measured by a Brunauer-Emmett-Teller (BET) method, wherein, specifically, the specific surface area may be calculated from a nitrogen gas adsorption amount at a liquid nitrogen temperature (77K) using BELSORP-mini II by Bell Japan Inc.

An "average particle diameter $D_{50}$" in the present invention means a particle size on the basis of 50% in a volume cumulative particle size distribution of positive electrode material powder, wherein it may be measured by using a laser diffraction method. For example, after dispersing the positive electrode material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the $D_{50}$ may then be measured by obtaining a particle size corresponding to 50% of cumulative amount of volume.

Also, the expressions "a" and "b" in the description of "a to b carbon atoms" in the present specification each denote the number of carbon atoms included in a specific functional group. That is, the functional group may include "a" to "b" carbon atoms. For example, the expression "alkyl group having 1 to 5 carbon atoms" denotes an alkyl group including 1 to 5 carbon atoms, that is, $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, or $(CH_3)_2CHCH_2CH_2$-.

Furthermore, an alkyl group or aryl group in the present specification may all be substituted or unsubstituted. Unless otherwise defined, the expression "substitution" denotes that at least one hydrogen bonded to carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

Hereinafter, the present invention will be described in more detail.

A lithium secondary battery according to the present invention includes at least one of configurations disclosed below, and may include any combination between technically possible configurations among the configurations below.

## Lithium Secondary Battery

The present invention relates to a lithium secondary battery.

Specifically, a lithium secondary battery according to the present invention is characterized in that it includes: a positive electrode; a negative electrode facing the positive electrode; a separator disposed between the positive electrode and the negative electrode; and a non-aqueous electrolyte, wherein the positive electrode includes a positive electrode active material, the positive electrode active material includes a lithium nickel-based oxide particle represented by Formula A, the lithium nickel-based oxide particle is in a form of a single particle composed of one single nodule or a pseudo-single particle that is a composite of 30 or less nodules, and the non-aqueous electrolyte includes a lithium salt, an organic solvent, and an additive, wherein the additive includes a cyclic borate-based compound represented by Formula 1; and a compound containing a propargyl group.

[Formula A] $Li_aNi_bCo_cMn_dM^1_eO_2$

In Formula A, $M^1$ is at least one selected from the group consisting of titanium (Ti), magnesium (Mg), aluminum (Al), zirconium (Zr), yttrium (Y), barium (Ba), calcium (Ca), strontium (Sr), tungsten (W), tantalum (Ta), niobium (Nb), and molybdenum (Mo), and $0.8 \leq a \leq 1.2$, $0.5 \leq b < 0.7$, $0 < c < 0.2$, $0 < d \leq 0.4$, $0 \leq e \leq 0.2$, and $b+c+d+e=1$, and

[Formula 1]

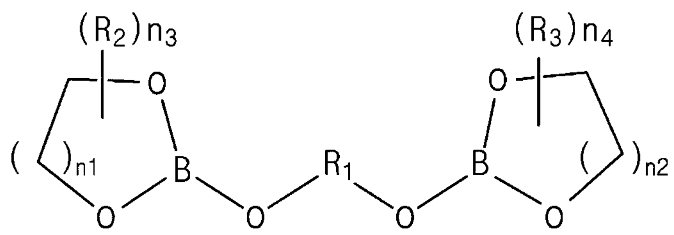

In Formula 1, $R_1$ is an alkylene group having 1 to 10 carbon atoms, $n_1$ and $n_2$ are each independently an integer selected from 0 to 5, $R_2$ and $R_3$ are each independently hydrogen, halogen, a nitrile group, an ester group, an ether group, a ketone group, a carboxyl group, an unsubstituted or substituted alkyl group, an unsubstituted or substituted alkenyl group, an unsubstituted or substituted alkynyl group, an unsubstituted or substituted alkoxy group, a boron group, a borate group, an isocyanate group, an isothiocyanate group, a silyl group, a siloxane group, a sulfone group, a sulfonate group, a sulfate group, or a combination of two or more thereof, $n_3$ is $2n_1 + 2$, $n_4$ is $2n_2 + 2$, when $n_3$ is an integer of 2 or more, a plurality of $R_2$s may be the same or different from each other, and, when $n_4$ is an integer of 2 or more, a plurality of $R_3$s may be the same or different from each other.

The lithium secondary battery according to the present invention is characterized in that it includes a positive electrode, which includes a positive electrode active material including a Mid-Ni NCM-based composite transition metal oxide particle having the form of a single particle or a pseudo-single particle, and a non-aqueous electrolyte which includes a cyclic borate-based compound having a specific structural formula and a compound containing a propargyl group as an additive.

In a case in which the positive electrode active material having the form of a single particle or a pseudo-single particle is used, if an operating voltage is increased to achieve excellent capacity characteristics, a problem occurs in which battery performance is degraded due to an excessive electrolyte side reaction on a surface of the positive electrode, but the cyclic borate-based compound represented by the specific formula and the compound containing a propargyl group prevent performance degradation due to the electrolyte side reaction by rapidly forming a uniform and stable film.

Specifically, the cyclic borate-based compound may form a uniform film through a ring-opening reaction on the surface of the positive electrode and may improve electrochemical properties of the battery by suppressing decomposition of the solvent through interaction with lithium ions, but the cyclic borate-based compound has difficulty in the ring-opening reaction due to steric hindrance according to its large molecular structure and a decrease in reactivity.

In this case, the compound containing a propargyl group, which is easy to undergo a redox reaction, solves the difficulty in the ring-opening reaction due to the steric hindrance of the cyclic borate-based compound. Specifically, since a radical derived from the propargyl group causes radical ring opening polymerization that breaks a ring structure of the cyclic borate-based compound, it solves the difficulty in the ring-opening reaction due to the steric hindrance and promotes a borate-based positive electrode film-forming reaction.

Accordingly, since the lithium secondary battery according to the present invention may suppress the electrolyte side reaction at high voltage and may prevent the performance degradation by forming a uniform and highly durable film on

the surface of the positive electrode, overall performance, particularly, high-temperature storage performance and high-temperature life performance, of the lithium secondary battery may be consequently improved.

In this case, the lithium secondary battery of the present invention may be prepared according to a typical method known in the art. For example, after an electrode assembly is formed by sequentially stacking a positive electrode according to the present invention, a negative electrode facing the positive electrode, and a separator between the positive electrode and the negative electrode, the electrode assembly is inserted into a battery can, and the lithium secondary battery may be prepared by injecting anon-aqueous electrolyte according to the present invention.

**(1) Positive Electrode**

The positive electrode includes a positive electrode active material.

The positive electrode active material includes a lithium nickel-based oxide particle represented by Formula A below.

[Formula A] $Li_aNi_bCo_cMn_dM^1{}_eO_2$

In Formula A, $M^1$ is at least one selected from the group consisting of Ti, Mg, Al, Zr, Y, Ba, Ca, Sr, W, Ta, Nb, and Mo, and $0.8 \leq a \leq 1.2$, $0.5 \leq b < 0.7$, $0 < c < 0.2$, $0 < d \leq 0.4$, $0 \leq e \leq 0.2$, and $b+c+d+e=1$.

a represents a molar ratio of lithium in the lithium nickel-based oxide particle, wherein a may satisfy $0.8 \leq a \leq 1.2$, $0.9 \leq a \leq 1.1$, or $0.95 \leq a \leq 1.10$. In a case in which the above range is satisfied, a stable layered crystal structure may be formed.

b represents a molar ratio of nickel among total metals excluding lithium in the lithium nickel-based oxide particle, wherein b may satisfy $0.5 \leq b \leq 0.7$, $0.52 \leq b \leq 0.68$, or $0.55 \leq b \leq 0.65$. In a case in which b is less than 0.5, it is not desirable because high capacity may not be achieved due to a low amount of the nickel among the transition metals. Also, with respect to a high-nickel lithium composite transition metal oxide in which b is greater than 0.7, an inactive surface is created due to surface degradation (rock-salt degradation) caused by a phase structural change from H2 to H3 at the positive electrode as the voltage increases, and, as a result, performance is degraded to limit the operating voltage. Accordingly, there is a disadvantage in that it is difficult to achieve the effect of the present invention, in which a uniform film is formed on the surface of the positive electrode through the ring-opening reaction of the additive according to the present invention, which will be described later, under high voltage conditions. Thus, in a case in which the above range is satisfied, since the formation of the film on the surface of the positive electrode through the ring-opening reaction of the additive, which will be described later, is easy, high-temperature storage performance and high-temperature life performance may be excellent and it may be more advantageous for the achievement of high capacity.

c represents a molar ratio of cobalt among the total metals excluding lithium in the lithium nickel-based oxide particle, wherein c may satisfy $0 < c < 0.2$, $0 < c \leq 0.18$, $0 < c \leq 0.16$, or $0 < c \leq 0.15$. In a case in which the above range is satisfied, good resistance characteristics and output characteristics may be achieved.

d represents a molar ratio of manganese among the total metals excluding lithium in the lithium nickel-based oxide particle, wherein d may satisfy $0 < d \leq 0.4$, $0.1 \leq d \leq 0.4$, $0.15 \leq d \leq 0.4$, or $0.2 < d \leq 0.4$. In a case in which the above range is satisfied, structural stability of the positive electrode active material may be excellent.

e represents a molar ratio of element $M^1$ among the total metals excluding lithium in the lithium nickel-based oxide particle, wherein $M^1$ is a doping element substituted at a transition metal site, and e may satisfy $0 \leq e \leq 0.20$, $0 \leq e \leq 0.15$, or $0 \leq e \leq 0.10$. In a case in which $M^1$ is included in an appropriate amount, it may play a role in promoting grain growth during sintering or improving crystal structure stability.

b/c may be in a range of 3.2 to 9.0, particularly 4.0 to 8.5, more particularly 5.0 to 8.0, and even more particularly 5.5 to 7.0. In a case in which the above range is satisfied, since a crystal structure of the positive electrode may not be collapsed even if charge and discharge are repeated under high voltage conditions, a cyclic borate-based film to be described later may be stably formed, and thus, the electrochemical properties of the battery may be excellent.

b/d may be in a range of 1.5 to 2.8, particularly 1.6 to 2.6, more particularly 1.7 to 2.4, and even more particularly1.8 to 2.3, for example, 1.9 to 2.1. The uniform and stable positive electrode film according to the present invention, which will be described later, may exhibit an effect of improving high-temperature characteristics due to the formation of the film only when microcracks do not occur severely between the positive electrode active material particles. Thus, in a case in which the above range is satisfied, a molar ratio of Ni to Mn in the positive electrode active material particle is appropriately controlled to increase the structural stability, an effect of improving high-temperature performance due to the formation of the uniform and stable film may be achieved accordingly, and, since variability in crystallite size (Lc) in a c-axis direction is not severe, the microcracks between the particles may not occur, and thus, an effect of forming the uniform and stable film may be increased.

d/c may be in a range of 1.2 to 4.8, particularly 1.6 to 4.4, more particularly 2.0 to 4.0, and even more particularly 2.4 to 3.6, for example, 2.8 to 3.2. In a case in which the above range is satisfied, since an appropriate ratio of manganese to

cobalt may be included, good resistance characteristics and output characteristics may be achieved, and the structural stability of the positive electrode active material may be excellent.

The lithium nickel-based oxide particle is in the form of a single particle composed of one single nodule or a pseudo-single particle that is a composite of 30 or less nodules, and specifically, the lithium nickel-based oxide particle may be a pseudo-single particle that is a composite of 2 to 20 nodules, more specifically, 2 to 10 nodules or may be a form including them. In a case in which the number of nodules constituting the lithium nickel-based oxide particle is greater than 30, since particle cracking increases during preparation of the electrode and generation of internal cracks due to volume expansion/contraction of the nodules is increased during charge and discharge, an effect of improving high-temperature life characteristics and high-temperature storage characteristics may be reduced. Also, in a case in which a positive electrode active material particle in a form of a secondary particle rather than the form of a single particle or a pseudo-single particle is used, since a surface area is large, a lot of oxygen radical reactions occur under high voltage conditions. Oxygen radicals in this case may be generated by stealing electrons from the propargyl group, and the propargyl group having electrons stolen as described above may not form a radical. That is, since the oxygen radical reaction excessively occurs around the electrode, an amount of the propargyl group, in which the radical is formed, is decreased around the electrode, and thus, there is a problem in that the ring-opening reaction of the cyclic borate to be described later may not be promoted. Furthermore, since there is a high possibility of the occurrence of the microcracks due to movement of lithium in a lattice during charge and discharge, it is difficult to achieve a film-forming effect due to the additive of the present invention, and in some cases, the organic solvent is depleted to degrade performance of the battery. Also, in a case in which the positive electrode active material in the form of a secondary particle and the additive of the present invention are used, since the cyclic borate-based compound and the compound containing a propargyl group may act as resistance, battery characteristics are degraded. Therefore, according to the present invention, a lithium secondary battery having improved high-temperature storage and high-temperature life characteristics is achieved when using the positive electrode active material particle in the form of a single particle or a pseudo-single particle and the additive of the present invention.

An average particle diameter ($D_{50}$) of the positive electrode active material may be in a range of 1 μm to 10 μm, particularly 2 μm to 8 μm, more particularly 3 μm to 7 μm, and even more particularly 3 μm to 5 um, for example, 3.0 μm to 4.5 μm. In a case in which the above range is satisfied, processability during the preparation of the electrode may be excellent, the electrochemical properties may be increased due to high electrolyte solution impregnability, resistance may be reduced, and the output characteristics may be improved.

A specific surface area of the positive electrode active material may be in a range of 0.1 $m^2/g$ to 3.0 $m^2/g$, particularly 0.3 $m^2/g$ to 2.5 $m^2/g$, more particularly 0.4 $m^2/g$ to 1.8 $m^2/g$, and even more particularly 0.5 $m^2/g$ to 1.0 $m^2/g$. In a case in which the above range is satisfied, rolling characteristics of the electrode may be improved, and the particle cracking may be reduced to suppress the side reaction with the electrolyte solution.

The positive electrode may include a positive electrode collector; and a positive electrode active material layer disposed on at least one surface of the positive electrode collector. In this case, the above-described positive electrode active material may be included in the positive electrode active material layer.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used.

The positive electrode collector may typically have a thickness of 3 μm to 500 μm.

Microscopic irregularities may be formed on the surface of the positive electrode collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer is disposed on at least one surface of the positive electrode collector. Specifically, the positive electrode active material layer may be disposed on one surface or both surfaces of the positive electrode collector.

The positive electrode active material may be included in an amount of 80 wt% to 99 wt%, more specifically, 90 wt% to 98 wt% based on a total weight of the positive electrode active material layer.

The positive electrode active material layer may further include a conductive agent and/or a binder together with the positive electrode active material.

The conductive agent is used to provide conductivity to the electrode, wherein any conductive agent may be used without particular limitation as long as it has suitable electron conductivity without causing chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The conductive agent may be included in an amount of 0.01 wt% to 10 wt%, particularly 0.1 wt% to 9 wt%, and more particularly 0.1 wt% to 5 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used.

The binder may be included in an amount of 1 wt% to 30wt%, particularly1 wt% to 20 wt%, and more particularly 1 wt% to 10 wt% based on the total weight of the positive electrode active material layer. In a case in which the above range is satisfied, the adhesion between the positive electrode active material particles and the adhesion between the positive electrode active material and the current collector may be improved.

The positive electrode active material layer may have a thickness of 30 μm to 400 μm, specifically, 40 μm to 110 μm.

The positive electrode may be prepared according to a typical method of preparing a positive electrode except that the above-described positive electrode active material is used. Specifically, a positive electrode slurry composition, which is prepared by dissolving or dispersing the positive electrode active material as well as optionally the binder, the conductive agent, and a dispersant in a solvent, is applied to the positive electrode collector, and the positive electrode may then be prepared by drying and rolling the coated positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode collector.

**(2) Negative Electrode**

The negative electrode facing the positive electrode may include a negative electrode collector; and a negative electrode active material layer disposed on at least one surface of the negative electrode collector.

The negative electrode collector is not particularly limited as long as it has high conductivity without causing chemical changes in the battery. Specifically, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode collector.

The negative electrode collector may typically have a thickness of 3 μm to 500um.

Microscopic irregularities may be formed on the surface of the negative electrode collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer is disposed on at least one surface of the negative electrode collector. Specifically, the negative electrode active material layer may be disposed on one surface or both surfaces of the negative electrode collector.

The negative electrode active material layer may include a negative electrode active material.

The negative electrode active material is a material capable of reversibly intercalating/deintercalating lithium ions, wherein it may include at least one selected from the group consisting of a carbon-based active material, a silicon-based active material, and lithium metal, may specifically include at least one selected from a carbon-based active material and a silicon-based active material, and may more specifically include a carbon-based active material.

The carbon-based active material may include at least one selected from the group consisting of graphite, hard carbon, soft carbon, carbon black, graphene, and fibrous carbon, and may specifically include graphite. The graphite, for example, may include at least one selected from the group consisting of artificial graphite and natural graphite.

An average particle diameter ($D_{50}$) of the carbon-based active material may be in a range of 10 μm to 30 μm, preferably, 15 μm to 25 μm in terms of ensuring structural stability during charge and discharge and reducing the side reaction with the electrolyte.

The silicon-based active material may include a compound represented by $SiO_x$ ($0 \leq x < 2$). With respect to $SiO_2$,

since it does not react with lithium ions, it may not store lithium, and thus, it is desirable that x is within the above range, and more preferably, the silicon-based active material may include SiO.

An average particle diameter ($D_{50}$) of the silicon-based active material may be in a range of 1 μm to 30 μm, preferably, 2μm to 15 μm in terms of ensuring the structural stability during charge and discharge and reducing the side reaction with the electrolyte.

The negative electrode active material may be included in an amount of 60 wt% to 99 wt%, preferably, 75 wt% to 95 wt% in the negative electrode active material layer.

The negative electrode active material layer may further include a binder and/or a conductive agent together with the negative electrode active material.

The binder is used to improve the performance of the battery by enhancing adhesion between the negative electrode active material layer and the negative electrode collector, wherein the binder, for example, may include at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, poly acrylic acid, an ethylene-propylene-diene monomer (EPDM), a sulfonated EPDM, a styrene-butadiene rubber (SBR), a fluorine rubber, and a material having hydrogen thereof substituted with Li, Na, or Ca, and may also include various copolymers thereof.

The binder may be included in an amount of 0.5 wt% to 10 wt%, preferably, 1 wt% to 5 wt% in the negative electrode active material layer.

The conductive agent is not particularly limited as long as it has conductivity without causing chemical changes in the battery, and, for example, a conductive material, such as: graphite such as natural graphite or artificial graphite; carbon black such as carbon black, acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 0.5 wt% to 10 wt%, preferably, 1 wt% to 5 wt% in the negative electrode active material layer.

The negative electrode active material layer may have a thickness of 10 μm to 100 μm, preferably, 50 μm to 80 μm.

The negative electrode may be prepared by coating at least one surface of the negative electrode collector with a negative electrode slurry including the negative electrode active material, the binder, the conductive agent, and/or a solvent for forming a negative electrode slurry, and then drying and rolling the coated negative electrode collector.

The solvent for forming a negative electrode slurry, for example, may include at least one selected from the group consisting of distilled water, NMP (N-methyl-2-pyrrolidone), ethanol, methanol, and isopropyl alcohol in terms of facilitating dispersion of the negative electrode active material, the binder, and/or the conductive agent, and may preferably include distilled water. A solid content of the negative electrode slurry may be in a range of 30 wt% to 80 wt%, specifically, 40 wt% to 70 wt%.

**(3) Separator**

The separator may be disposed between the positive electrode and the negative electrode.

A conventional porous polymer film typically used as a separator, for example, a porous polymer film prepared from a polyolefin-based polymer, such as an ethylene copolymer, a propylene copolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

**(4)Non-aqueous Electrolyte**

The non-aqueous electrolyte according to the present invention includes a lithium salt, an organic solvent, and an additive.

**1) Lithium Salt**

Various lithium salts commonly used in a non-aqueous electrolyte for a lithium secondary battery may be used as the lithium salt used in the present invention without limitation. For example, the lithium salt may include $Li^+$ as a cation, and

may include at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^7$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$ as an anion.

Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$, and LiBETI ($LiN(SO_2CF_2CF_3)_2$). Specifically, the lithium salt may include at least one selected from the group consisting of $LiBF_4$, $LiClO_4$, $LiPF_6$, LiBOB($LiB(C_2O_4)_2$), $LiCF_3SO_3$, LiTFSI ($LiN(SO_2CF_3)_2$), LiFSI (($LiN(SO_2F)_2$), and LiBETI ($LiN(SO_2CF_2CF_3)_2$).

The lithium salt may be included in a concentration of 0.1 M to 4.0 M, particularly 0.8 M to 3.0 M, and more particularly 0.8 M to 2.0 M in the non-aqueous electrolyte. When the concentration of the lithium salt satisfies the above range, the output characteristics of the battery may be improved by improving a lithium ion yield ($Li^+$ transference number) and a degree of dissociation of the lithium ions.

**2) Organic Solvent**

As the organic solvent, any non-aqueous solvent commonly used in a lithium secondary battery is not particularly limited as long as decomposition due to an oxidation reaction during charge and discharge of the lithium secondary battery may be minimized.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent which may well dissociate the lithium salt in the electrolyte due to high permittivity as a highly viscous organic solvent, wherein the cyclic carbonate-based organic solvent may specifically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and may more specifically include ethylene carbonate.

Also, the linear carbonate-based organic solvent is an organic solvent having low viscosity and low permittivity, wherein the linear carbonate-based organic solvent may specifically include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and may specifically include ethyl methyl carbonate (EMC).

The organic solvent may be a mixture of the cyclic carbonate-based organic solvent and the linear carbonate-based organic solvent. In this case, the cyclic carbonate-based organic solvent and the linear carbonate-based organic solvent may be mixed in a volume ratio of 10:90 to 40:60, particularly 10:90 to 30:70, and more particularly 15:85 to 30:70. In a case in which the mixing ratio of the cyclic carbonate-based organic solvent to the linear carbonate-based organic solvent satisfies the above range, high permittivity and low viscosity characteristics may be simultaneously satisfied, and excellent ionic conductivity characteristics may be achieved.

Furthermore, the organic solvent may further include at least one ester-based organic solvent selected from the group consisting of a linear ester-based organic solvent and a cyclic ester-based organic solvent in at least one carbonate-based organic solvent selected from the group consisting of the cyclic carbonate-based organic solvent and the linear carbonate-based organic solvent to prepare an electrolyte having high ionic conductivity.

The linear ester-based organic solvent may specifically include at least one selected from the group consisting of methyl acetate, ethyl acetate, propyl acetate, methyl propionate, ethyl propionate, propyl propionate, and butyl propionate.

Also, the cyclic ester-based organic solvent may specifically include at least one selected from the group consisting of γ-butyrolactone, γ-valerolactone, γ-caprolactone, γ-valerolactone, and γ-caprolactone.

The organic solvent may be used by adding an organic solvent typically used in a non-aqueous electrolyte without limitation, if necessary. For example, the organic solvent may further include at least one organic solvent selected from an ether-based organic solvent, a glyme-based solvent, and a nitrile-based organic solvent.

As the ether-based solvent, any one selected from the group consisting of dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent as well as less reactivity with metal, wherein the glyme-based solvent may include at least one selected from the group consisting of dimethoxyethane (glyme, DME), diethoxyethane, diglyme, tri-glyme (triglyme), and tetra-glyme (TEGDME), but is not limited thereto.

The nitrile-based solvent may be at least one selected from the group consisting of acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

### 3) Additive

The non-aqueous electrolyte includes an additive.

The additive includes a cyclic borate-based compound represented by Formula 1 below and a compound containing a propargyl group.

[Formula 1]

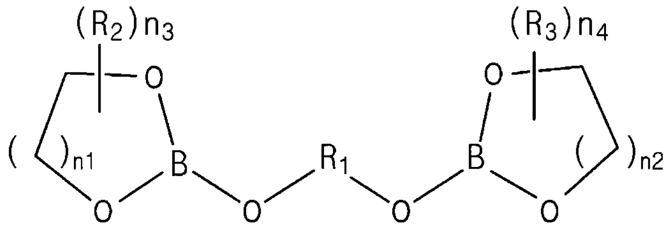

In Formula 1, $R_1$ is an alkylene group having 1 to 10 carbon atoms, $n_1$ and $n_2$ are each independently an integer selected from 0 to 5, $R_2$ and $R_3$ are each independently hydrogen, halogen, a nitrile group, an ester group, an ether group, a ketone group, a carboxyl group, an unsubstituted or substituted alkyl group, an unsubstituted or substituted alkenyl group, an unsubstituted or substituted alkynyl group, an unsubstituted or substituted alkoxy group, a boron group, a borate group, an isocyanate group, an isothiocyanate group, a silyl group, a siloxane group, a sulfone group, a sulfonate group, a sulfate group, or a combination of two or more thereof, $n_3$ is $2n_1 + 2$, $n_4$ is $2n_2 +2$, when $n_3$ is an integer of 2 or more, a plurality of $R_2$s may be the same or different from each other, and, when $n_4$ is an integer of 2 or more, a plurality of $R_3$s may be the same or different from each other.

The cyclic borate-based compound represented by Formula 1 may achieve the effect of improving high-temperature life characteristics and high-temperature storage characteristics by forming a uniform positive electrode film through the ring-opening reaction. Particularly, since the compound of Formula 1 has a higher HOMO (Highest Occupied Molecular Oribital) energy than ethylene carbonate (EC), it may easily donate electrons, and thus, it may form a uniform and stable positive electrode film through a faster oxidation reaction than the solvent and may reduce the side reaction with the electrolyte solution by stabilizing $PF_6^-$, and, since the uniform and stable positive electrode film of the polymer with a lot of oxygen (O) like the above compound may improve movement characteristics of lithium due to low barrier energy, the performance of the lithium secondary battery may be improved. Also, since the compound of [Formula 1] has two borate ester groups, it may suppress the decomposition of the solvent through the interaction with lithium ions while performing the ring-opening reaction on the surface of the positive electrode.

However, the cyclic borate-based compound represented by Formula 1 has difficulty in forming a film through the ring-opening reaction due to the steric hindrance according to its large molecular structure. In this case, since the compound containing a propargyl group, which is easy to undergo a redox reaction, solves the difficulty in the ring-opening reaction due to the steric hindrance by promoting the ring-opening reaction of the cyclic borate-based compound through radical polymerization, the compound containing a propargyl group facilitates the formation of the film on the surface of the positive electrode.

Thus, if the cyclic borate-based compound and the compound containing a propargyl group according to the present invention are used, a radical derived from the propargyl group causes the ring-opening reaction, which breaks the ring structure of the cyclic borate-based compound, to promote a borate-based positive electrode film-forming reaction. The film formed by interaction between the cyclic borate-based compound and the compound containing a propargyl group maintains a form of a stable organic film even at high temperatures, and has an effect of suppressing dissolution of transition metals in the positive electrode. Also, since a thin and uniform borate-based film is formed as the cyclic borate is decomposed, there is an effect of improving cycle life performance. That is, since the uniform and highly durable positive electrode film may be rapidly formed by the interaction between the cyclic borate-based compound and the compound containing a propargyl group, the high-temperature storage characteristics and high-temperature life characteristics of the lithium secondary battery are improved.

In Formula 1, $R_1$ may specifically be an alkylene group having 1 to 5 carbon atoms, and may more specifically be an alkylene group having 2 to 4 carbon atoms. In a case in which the above range is satisfied, since a distance between two

cyclic borate groups is not excessively close, the steric hindrance of the cyclic borate-based compound may be alleviated. Also, since one of the two cyclic borate groups interacts with the electrode through the ring-opening reaction to form a film and the other one, as a borate ester group, suppresses additional decomposition of the solvent, the borate ester group may be positioned far from the surface of the electrode when the distance between the two cyclic borate groups is excessively increased, and thus, it may be difficult to suppress the additional decomposition of the organic solvent on the surface of the electrode.

In Formula 1, specifically, $n_1$ and $n_2$ may each independently be an integer selected from 0 to 4, and more specifically, may each independently be an integer selected from 0 to 3. More specifically, in Formula 1, $n_1$ and $n_2$ may each be 2, and, in this case, it is desirable in that the difficulty in the ring-opening reaction due to the steric hindrance may be improved by not including an excessively small cyclic ring, and mobility of the lithium ions may be improved because a carbon chain of an appropriate length is formed during the ring-opening reaction by not including an excessively large cyclic ring.

In Formula 1, specifically, $R_2$ and $R_3$ may each independently be hydrogen, halogen(the halogen may be selected from fluorine (F), chlorine (Cl), bromine (Br), and iodine (I), and may specifically be F), a nitrile group, an ester group, an ether group, or a combination of two or more thereof. Since these substituents have excellent reducing power, are advantageous in forming a polymer-type positive electrode film, and also have excellent lithium ion transport performance, they may improve the battery performance.

More specifically, the cyclic borate-based compound represented by Formula 1 may be represented by Formula 1-1 below.

[Formula 1-1]

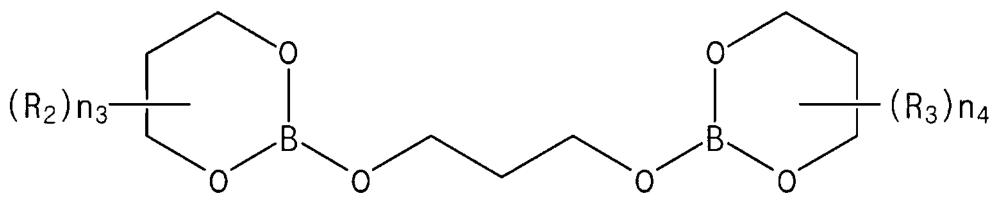

In Formula 1-1, $R_2$ and $R_3$ are each independently as defined in [Formula 1].

In Formula 1-1, $n_3$ is 6, and $n_4$ is 6.

The compound represented by Formula 1-1 may effectively prevent the decomposition of the organic solvent on the surface of the electrode because the distance between the two cyclic borate groups is not excessively long, and the steric hindrance of the compound may be minimized because the distance between the two cyclic borate groups is appropriately secured.

More specifically, the cyclic borate-based compound represented by Formula 1 may be represented by Formula 1-2 below.

[Formula 1-2]

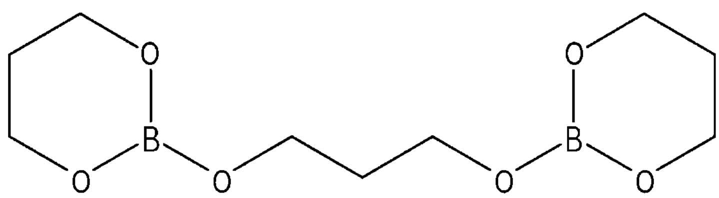

The cyclic borate-based compound may be included in the non-aqueous electrolyte in an amount of 0.01 wt% to 12 wt%, particularly 0.05 wt% to 10 wt%, more particularly 0.1 wt% to 5.0 wt%, and even more particularly 0.2 wt% to 1.0 wt% based on a total weight of the non-aqueous electrolyte. In a case in which the above range is satisfied, resistance may not be excessively increased because an appropriate film thickness is formed, and coverage capability may be excellent because the cyclic borate-based compound is included so as to sufficiently surround the positive electrode.

The compound containing a propargyl group may specifically include at least one selected from the group consisting of compounds represented by Formulae 2 and 3 below, and may more specifically include the compound represented by Formula 2 below.

[Formula 2]

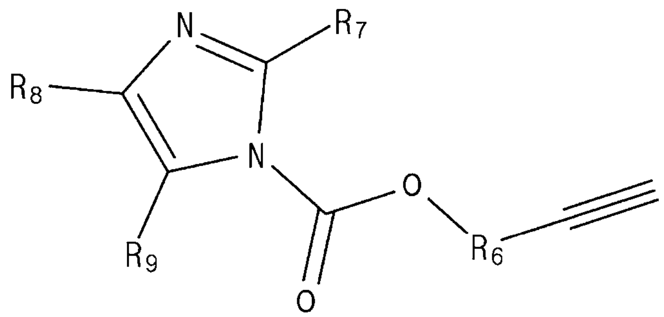

[Formula 3]

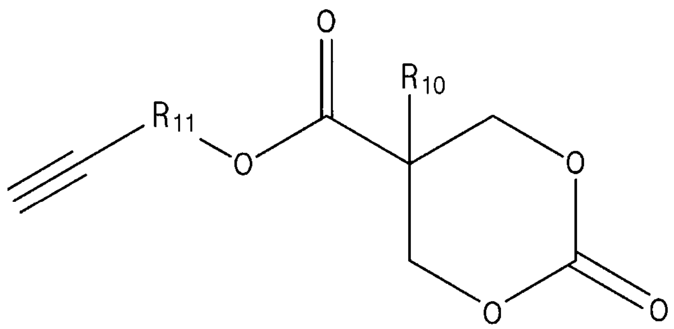

In Formula 2, $R_6$ is an alkylene group having 1 to 3 carbon atoms which may be substituted with fluorine, and $R_7$ to $R_9$ are each independently hydrogen, an alkyl group having 1 to 3 carbon atoms, a nitrile group, or a combination of two or more thereof.

In Formula 3, $R_{10}$ is hydrogen, an alkyl group having 1 to 10 carbon atoms, a cycloalkyl group having 3 to 8 carbon atoms, or a combination of two or more thereof, and $R_{11}$ is an alkylene group having 1 to 8 carbon atoms which may be substituted with fluorine.

The compounds represented by Formulae 2 and 3 may rapidly form the positive electrode film by more easily performing the ring-opening reaction of the cyclic borate-based compound, the propargyl group becomes a cross-link site in the SEI to enable an additional reaction, and this additional cross-linking reaction may be effective in suppressing performance degradation due to electrode position of the transition metals dissolved from the positive electrode on the negative electrode by forming a robust SEI film. Also, cyclic carbonate functional group and imidazole functional group, which are included in Formulae 2 and 3, may improve performance and may reduce the dissolution of the transition metals, which may occur during high-voltage charge, by effectively suppressing degradation of the positive electrode and the side reaction on the surface of the positive electrode through the formation of a stable positive electrode film.

Specifically, the compound represented by Formula 2 may be represented by Formula 2-1 below.

[Formula 2-1]

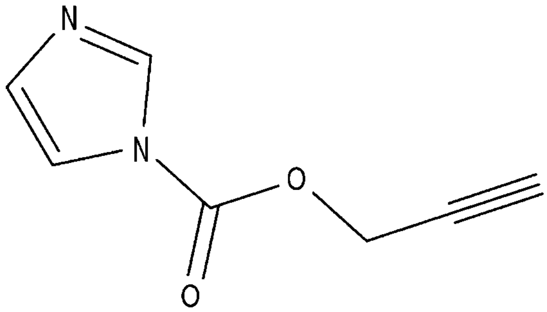

Also, the compound represented by Formula 3 may be represented by Formula 3-1 below.

[Formula 3-1]

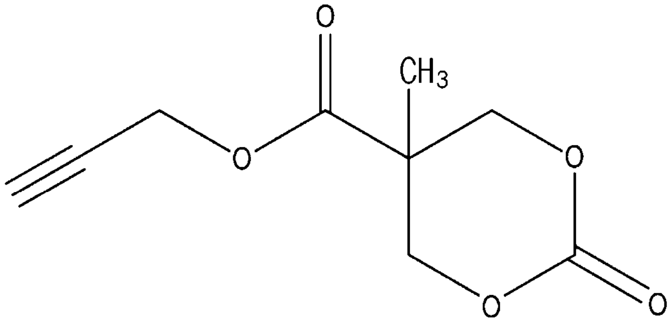

The compound containing a propargyl group may be included in the non-aqueous electrolyte in an amount of 0.01 wt% to 6 wt%, particularly 0.05 wt% to 4 wt%, more particularly 0.1 wt% to 2.0 wt%, and even more particularly 0.2 wt% to 1.0 wt% based on the total weight of the non-aqueous electrolyte. In a case in which the above range is satisfied, the resistance may not be excessively increased because an appropriate film thickness is formed, and the coverage capability may be excellent because the compound is included so as to sufficiently surround the positive electrode.

A weight ratio of the cyclic borate-based compound to the compound containing a propargyl group may be in a range of 1:99 to 99:1, particularly 5:95 to 95:5, more particularly 10:90 to 95:5, and even more particularly 25:75 to 75:25, for example, 40:60 to 60:40. In a case in which the above range is satisfied, since a positive electrode film of an appropriate thickness may be formed and the positive electrode film may be rapidly formed, the high-temperature storage characteristics and high-temperature life characteristics may be improved.

The additive may further include an additional additive. The additional additive may be further included in the non-aqueous electrolyte in order to prevent occurrence of collapse of the positive electrode and the negative electrode due to the decomposition of the non-aqueous electrolyte in a high output environment or to further improve low-temperature high rate discharge characteristics, high-temperature stability, overcharge prevention, and an effect of suppressing battery swelling at high temperature.

Specifically, the additional additive may be at least one selected from the group consisting of vinylene carbonate, vinyl ethylene carbonate, fluoroethylene carbonate, propane sultone, propene sultone, succinonitrile, adiponitrile, ethylene sulfate, LiBOB(lithium bis-(oxalato)borate), TMSPa(3-trimethoxysilanyl-propyl-N-aniline), and TMSPi(tris(trimethylsilyl) phosphite), and may specifically be vinylene carbonate.

The additional additive may be included in the non-aqueous electrolyte in an amount of 0.1 wt% to 15 wt%.

Since the lithium secondary battery according to the present invention as described above has excellent stability and electrochemical performance even at high voltage, an end-of-charge voltage during operation may be 4.30 V or more, particularly 4.35 V or more, and more particularly 4.40 V or more, and in a case in which the lithium secondary battery is operated at such a high operating voltage, high-capacity characteristics better than those of a conventional lithium secondary battery may be achieved. The operating voltage of the lithium secondary battery according to the present invention may be in a range of 2.0 V to 4.45 V, preferably, 2.5 V to 4.4 V.

A shape of the lithium secondary battery of the present invention is not particularly limited, but a cylindrical type using a can, a prismatic type, a pouch type, or a coin type may be used.

Also, since the lithium secondary battery according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

## Examples and Comparative Examples

### Example 1: Lithium Secondary Battery Preparation

(Preparation of Non-aqueous Electrolyte)

A mixture of ethylene carbonate (EC) and ethyl methyl carbonate (EMC) in a volume ratio of 20:80 was used as an organic solvent.

A non-aqueous electrolyte was prepared by adding $LiPF_6$ as a lithium salt, and trimethylene borate (TMEB) and the compound represented by Formula 2-1, as an additive, to the above organic solvent.

The $LiPF_6$ was included in the non-aqueous electrolyte at a concentration of 1.2 M.

The trimethylene borate (TMEB) was included in an amount of 0.5 wt% in the non-aqueous electrolyte, and the compound represented by Formula 2-1 was included in an amount of 0.5 wt% in the non-aqueous electrolyte.

(Lithium Secondary Battery Preparation)

A positive electrode active material ($LiNi_{0.6}Co_{0.1}Mn_{0.3}O_2$) in a form of a single particle or a pseudo-single particle :a conductive agent (carbon black) : a binder(polyvinylidene fluoride (PVdF)) were added in a weight ratio of 97.6:0.8:1.6 to N-methyl-2-pyrrolidone (NMP), as a solvent, to prepare a positive electrode slurry (solid content 60 wt%).

The positive electrode active material had an average particle diameter ($D_{50}$) of 3.7 μm, and a Brunauer-Emmett-Teller (BET) specific surface area of 0.93 $m^2/g$.

A 13.5um thick positive electrode collector (Al thin film) was coated with the positive electrode slurry, dried, and then roll-pressed to prepare a positive electrode.

A negative electrode active material (graphite) :a conductive agent (carbon black) :a binder (SBR-CMC) were added to distilled water, as a solvent, in a weight ratio of 96.75:0.50:2.75 to prepare a negative electrode slurry (solid content 60 wt%).

A 6 μm thick negative electrode collector (Cu thin film) was coated with the negative electrode slurry, dried, and then roll-pressed to prepare a negative electrode.

After a porous polymer, as a separator, was disposed between the above-prepared positive electrode and negative electrode in a dry room, the above-prepared non-aqueous electrolyte was injected to prepare a lithium secondary battery.

### Example 2: Lithium Secondary Battery Preparation

A lithium secondary battery was prepared in the same manner as in Example 1 except that, as an additive, trimethylene borate (TMEB) was included in an amount of 10 wt% in the non-aqueous electrolyte, and the compound represented by Formula 2-1 was included in an amount of 0.5 wt% in the non-aqueous electrolyte.

### Example 3: Lithium Secondary Battery Preparation

A lithium secondary battery was prepared in the same manner as in Example 1 except that, as an additive, trimethylene borate (TMEB) was included in an amount of 0.05 wt% in the non-aqueous electrolyte, and the compound

represented by Formula 2-1 was included in an amount of 0.5 wt% in the non-aqueous electrolyte.

**Example 4: Lithium Secondary Battery Preparation**

A lithium secondary battery was prepared in the same manner as in Example 1 except that, as an additive, trimethylene borate (TMEB) was included in an amount of 0.5 wt% in the non-aqueous electrolyte, and the compound represented by Formula 2-1 was included in an amount of 5 wt% in the non-aqueous electrolyte.

**Example 5: Lithium Secondary Battery Preparation**

A lithium secondary battery was prepared in the same manner as in Example 1 except that, as an additive, trimethylene borate (TMEB) was included in an amount of 0.5 wt% in the non-aqueous electrolyte, and the compound represented by Formula 2-1 was included in an amount of 0.05 wt% in the non-aqueous electrolyte.

**Comparative Example 1: Lithium Secondary Battery Preparation**

A lithium secondary battery was prepared in the same manner as in Example 1 except that an additive was not included.

**Comparative Example 2: Lithium Secondary Battery Preparation**

A lithium secondary battery was prepared in the same manner as in Example 1 except that, as an additive, only trimethylene borate (TMEB) was included in an amount of 0.5 wt% in the non-aqueous electrolyte.

**Comparative Example 3: Lithium Secondary Battery Preparation**

A lithium secondary battery was prepared in the same manner as in Example 1 except that, as an additive, only the compound represented by Formula 2-1 was included in an amount of 0.5 wt% in the non-aqueous electrolyte.

**Comparative Example 4: Lithium Secondary Battery Preparation**

A lithium secondary battery was prepared in the same manner as in Example 1 except that a positive electrode active material ($LiNi_{0.6}Co_{0.1}Mn_{0.3}O_2$) in a form of a secondary particle was used instead of the positive electrode active material in the form of a single particle or a pseudo-single particle as a positive electrode active material, and no additive was included in the non-aqueous electrolyte.

The positive electrode active material had an average particle diameter ($D_{50}$) of 5.2 $\mu$m, and a BET specific surface area of 0.638 $m^2$/g.

**Comparative Example 5: Lithium Secondary Battery Preparation**

A lithium secondary battery was prepared in the same manner as in Example 1 except that a positive electrode active material ($LiNi_{0.6}Co_{0.1}Mn_{0.3}O_2$) in a form of a secondary particle was used instead of the positive electrode active material in the form of a single particle or a pseudo-single particle as a positive electrode active material.

The positive electrode active material had an average particle diameter ($D_{50}$) of 5.2 $\mu$m, and a BET specific surface area of 0.638 $m^2$/g.

**Comparative Example 6: Lithium Secondary Battery Preparation**

A lithium secondary battery was prepared in the same manner as in Example 1 except that a positive electrode active material ($LiNi_{0.6}Co_{0.2}Mn_{0.2}O_2$) in a form of a single particle or a pseudo-single particle was used, and no additive was included in the non-aqueous electrolyte.

The positive electrode active material had an average particle diameter ($D_{50}$) of 4.0 $\mu$m, and a BET specific surface area of 0.8 $m^2$/g.

**Comparative Example 7: Lithium Secondary Battery Preparation**

A lithium secondary battery was prepared in the same manner as in Example 1 except that a positive electrode active material ($LiNi_{0.6}Co_{0.2}Mn_{0.2}O_2$) in a form of a single particle or a pseudo-single particle was used, and, as an additive,

only trimethylene borate (TMEB) was included in an amount of 0.5 wt% in the non-aqueous electrolyte.

The positive electrode active material had an average particle diameter ($D_{50}$) of 4.0 μm, and a BET specific surface area of 0.8 $m^2/g$.

**Comparative Example 8: Lithium Secondary Battery Preparation**

A lithium secondary battery was prepared in the same manner as in Example 1 except that a positive electrode active material ($LiNi_{0.6}Co_{0.2}Mn_{0.2}O_2$) in a form of a single particle or a pseudo-single particle was used, and, as an additive, only the compound represented by Formula 2-1 was included in an amount of 0.5 wt% in the non-aqueous electrolyte.

The positive electrode active material had an average particle diameter ($D_{50}$) of 4.0 μm, and a BET specific surface area of 0.8 $m^2/g$.

**Comparative Example 9: Lithium Secondary Battery Preparation**

A lithium secondary battery was prepared in the same manner as in Example 1 except that a positive electrode active material ($LiNi_{0.6}Co_{0.2}Mn_{0.2}O_2$) in a form of a single particle or a pseudo-single particle was used.

The positive electrode active material had an average particle diameter ($D_{50}$) of 4.0 μm, and a BET specific surface area of 0.8 $m^2/g$.

[Table 1]

| | Positive electrode active material | | Non-aqueous electrolyte | | | |
|---|---|---|---|---|---|---|
| | composit ion | Particle form | Lithiu m salt ($LiPF_6$) | Organic solvent | Additive | |
| | | | Molar concen tratio n (M) | | TMEB amount (wt%) | [Formu la 2-1] amount (wt%) |
| Example 1 | $LiNi_{0.6}Co_{0.1}Mn_{0.3}O_2$ | Single particle or pseudo-single particle | 1.2 | EC:EMC (volume ratio 20:80) | 0.5 | 0.5 |
| Example 2 | $LiNi_{0.6}Co_{0.1}Mn_{0.3}O_2$ | Single particle or pseudo-single particle | 1.2 | EC:EMC (volume ratio 20:80) | 10 | 0.5 |
| Example 3 | $LiNi_{0.6}Co_{0.1}Mn_{0.3}O_2$ | Single particle or pseudo-single particle | 1.2 | EC:EMC (volume ratio 20:80) | 0.05 | 0.5 |
| Example 4 | $LiNi_{0.6}Co_{0.1}Mn_{0.3}O_2$ | Single particle or pseudo-single particle | 1.2 | EC:EMC (volume ratio 20:80) | 0.5 | 5 |
| Example 5 | $LiNi_{0.6}Co_{0.1}Mn_{0.3}O_2$ | Single particle or pseudo-single particle | 1.2 | EC:EMC (volume ratio 20:80) | 0.5 | 0.05 |
| Comparative Example 1 | $LiNi_{0.6}Co_{0.1}Mn_{0.3}O_2$ | Single particle or pseudo-single particle | 1.2 | EC:EMC (volume ratio 20:80) | - | - |
| Comparative Example 2 | $LiNi_{0.6}Co_{0.1}Mn_{0.3}O_2$ | Single particle or pseudo-single particle | 1.2 | EC:EMC (volume ratio 20:80) | 0.5 | - |
| Comparative Example 3 | $LiNi_{0.6}Co_{0.1}Mn_{0.3}O_2$ | Secondary particle | 1.2 | EC:EMC (volume ratio 20:80) | - | 0.5 |

(continued)

| | Positive electrode active material | | Non-aqueous electrolyte | | | |
|---|---|---|---|---|---|---|
| | composit ion | Particle form | Lithiu m salt ($LiPF_6$) Molar concen tratio n (M) | Organic solvent | Additive | |
| | | | | | TMEB amount (wt%) | [Formu la 2-1] amount (wt%) |
| Comparati ve Example 4 | $LiNi_{0.6}Co_{0\ .1}Mn_{0.3}O_2$ | Secondary parti-cle | 1.2 | EC:EMC (volume ratio 20:80) | - | - |
| Comparati ve Example 5 | $LiNi_{0.6}Co_{0\ .1}Mn_{0.3}O_2$ | Single particle or pseudo-single particle | 1.2 | EC:EMC (volume ratio 20:80) | 0.5 | 0.5 |
| Comparati ve Example 6 | $LiNi_{0.6}Co_{0\ .2}Mn_{0.2}O_2$ | Single particle or pseudo-single particle | 1.2 | EC:EMC (volume ratio 20:80) | - | - |
| Comparati ve Example 7 | $LiNi_{0.6}Co_{0\ .2}Mn_{0.2}O_2$ | Single particle or pseudo-single particle | 1.2 | EC:EMC (volume ratio 20:80) | 0.5 | - |
| Comparati ve Example 8 | $LiNi_{0.6}Co_{0\ .2}Mn_{0.2}O_2$ | Single particle or pseudo-single particle | 1.2 | EC:EMC (volume ratio 20:80) | - | 0.5 |
| Comparati ve Example 9 | $LiNi_{0.6}Co_{0\ .2}Mn_{0.2}O_2$ | Single particle or pseudo-single particle | 1.2 | EC:EMC (volume ratio 20:80) | 0.5 | 0.5 |

## Experimental Examples and Reference Examples

### Experimental Example 1: Evaluation of High-temperature Storage Characteristics

The lithium secondary batteries of Examples 1 to 5 and Comparative Examples 1 to 9 were charged to 4.4 V/0.2974 mA under 0.1 C/4.4 V constant current-constant voltage (CC-CV) conditions at room temperature and discharged at 0.1 C to 2.5 V to perform initial charge and discharge, and thereafter, the lithium secondary batteries were charged to 4.4 V/0.2974 mA under 0.1 C/4.4 V CC-CV conditions at room temperature and stored at 60°C for 8 weeks, and resistances of the lithium secondary batteries before storage were measured and set as initial resistances of the lithium secondary batteries.

The lithium secondary batteries stored for 8 weeks were charged to 4.4 V/0.2974 mA under 0.1 C/4.4 V CC-CV conditions and discharged at 0.1 C to 2.5 V to measure capacity during discharge, and resistance increased during a storage period of 8 weeks was calculated.

Capacity retention and resistance increase rate were evaluated according to the following equations, and the results thereof are presented in Table 2 below.

Capacity retention(%) = (discharge capacity after 8 weeks of storage/initial discharge capacity) × 100

Resistance increase rate(%) = (resistance after 8 weeks of storage/initial resistance} × 100

### Experimental Example 2: Evaluation of High-temperature Life Characteristics

That the lithium secondary batteries of Examples 1 to 5 and Comparative Examples 1 to 9 were charged at 0.3 C to 4.4 V under a CC/CV condition at 45°C using an electrochemical charger/discharger at room temperature and then discharged at 0.3 C to 2.5 V under a CC condition was set as one cycle, 200 charge and discharge cycles were performed to

evaluate capacity retention and resistance increase rate according to the following equations, and the results thereof are presented in Table 2 below.

$$\text{Capacity retention(\%)} = (\text{discharge capacity after 200 cycles/discharge capacity after one cycle}) \times 100$$

$$\text{Resistance increase rate(\%)} = (\text{resistance after 200 cycles/resistance after one cycle}) \times 100$$

[Table 2]

| | Experimental Example 1 (high-temperature storage characteristics) | | Experimental Example 2 (high-temperature life characteristics) | |
|---|---|---|---|---|
| | Capacity retention(% ) | Resistance increase rate (%) | Capacity retention(% ) | Resistance increase rate (%) |
| Example 1 | 92 | 19 | 91 | 20 |
| Example 2 | 88 | 23 | 88 | 22 |
| Example 3 | 86 | 21 | 84 | 25 |
| Example 4 | 89 | 22 | 86 | 21 |
| Example 5 | 88 | 23 | 88 | 22 |
| Comparative Example 1 | 78 | 33 | 76 | 29 |
| Comparative Example 2 | 80 | 31 | 79 | 27 |
| Comparative Example 3 | 78 | 32 | 78 | 29 |
| Comparative Example 4 | 65 | 52 | 62 | 42 |
| Comparative Example 5 | 68 | 28 | 65 | 32 |
| Comparative Example 6 | 70 | 55 | 65 | 48 |
| Comparative Example 7 | 72 | 36 | 74 | 37 |
| Comparative Example 8 | 70 | 54 | 68 | 47 |
| Comparative Example 9 | 72 | 38 | 73 | 35 |

Referring to Table 2, with respect to Examples 1 to 5 of the present invention, it may be confirmed that high-temperature storage characteristics and high-temperature life characteristics were significantly improved in comparison to those of Comparative Examples 1 to 9.

Specifically, referring to Examples 1 to 5 and Comparative Examples 1 to 3, it may be understood that, in a case in which any one of the TMEB and the compound represented by [Formula 2-1] was not added, the high-temperature storage characteristics and the high-temperature life characteristics were significantly degraded. That is, it may be understood that the effect of improving high-temperature storage characteristics and high-temperature life characteristics of the present invention was an effect that appeared only when the two compounds were simultaneously added to the non-aqueous electrolyte.

Referring to Comparative Examples 4 and 5, it may be confirmed that, in a case in which the positive electrode active material was in the form of a secondary particle, the high-temperature storage characteristics and high-temperature life characteristics were not significantly improved even if the TMEB and the compound represented by [Formula 2-1] were simultaneously added.

Referring to Comparative Examples 6 to 9, in a case in which the composition of the positive electrode active material did not satisfy the above-described specific relationship, it may be confirmed that the high-temperature storage characteristics and high-temperature life characteristics were not significantly improved even if the TMEB and the compound represented by [Formula 2-1] were simultaneously added.

## Reference Examples

### Reference Example 1

(Non-aqueous Electrolyte Preparation)

The same non-aqueous electrolyte as used in Example 1 was used except that no additive was included in the non-aqueous electrolyte.

(Lithium Secondary Battery Preparation)

A positive electrode active material (in a form of a secondary particle, $LiNi_{0.86}Co_{0.08}Mn_{0.06}O_2$) :a conductive agent (CNT) : a binder (SBR-CMC) were added in a weight ratio of 96.78:1.20:2.02 to N-methyl-2-pyrrolidone (NMP), as a solvent, to prepare a positive electrode slurry (solid content 60 wt%).

The positive electrode active material had an average particle diameter ($D_{50}$) of 4.3 μm, and a BET specific surface area of 0.68 $m^2$/g.

A 13.5um thick positive electrode collector (Al thin film)was coated with the positive electrode slurry, dried, and then roll-pressed to prepare a positive electrode.

A negative electrode active material (graphite) :a conductive agent (carbon black) :a binder (polyvinylidene fluoride (PVdF)) were added to distilled water, as a solvent, in a weight ratio of 96.15:0.50:3.35 to prepare a negative electrode slurry (solid content 60 wt%).

A 6 μm thick negative electrode collector (Cu thin film) was coated with the negative electrode slurry, dried, and then roll-pressed to prepare a negative electrode.

After a porous polymer, as a separator, was disposed between the above-prepared positive electrode and negative electrode in a dry room, the above-prepared non-aqueous electrolyte was injected to prepare a lithium secondary battery.

**Reference Example 2**

A lithium secondary battery was prepared in the same manner as in Reference Example 1 except that, as an additive, only trimethylene borate (TMEB) was included in an amount of 0.5 wt% in the non-aqueous electrolyte.

**Reference Example 3**

A lithium secondary battery was prepared in the same manner as in Reference Example 1 except that, as an additive, only the compound represented by Formula 2-1was included in an amount of 0.5 wt% in the non-aqueous electrolyte.

**Reference Example 4**

A lithium secondary battery was prepared in the same manner as in Reference Example 1 except that, as an additive, trimethylene borate (TMEB) was included in an amount of 0.5 wt% in the non-aqueous electrolyte, and the compound represented by Formula 2-1 was included in an amount of 0.5 wt% in the non-aqueous electrolyte.

[Table 3]

| | Positive electrode active material | | Non-aqueous electrolyte | | | |
|---|---|---|---|---|---|---|
| | composition | Particle form | Lithiu m salt ($LiPF_6$) | Organic solvent | Additive | |
| | | | Molar concen tratio n (M) | | TMEB amoun t (wt%) | [Form ula 2-1] amoun t (wt%) |
| Reference Example 1 | $LiNi_{0.86}Co_{0.08}Mn_{0.06}O_2$ | Secondary particle | 1.5 | EC:EMC (volume ratio 20:80) | - | - |
| Reference Example 2 | $LiNi_{0.86}Co_{0.08}Mn_{0.06}O_2$ | Secondary particle | 1.5 | EC:EMC (volume ratio 20:80) | 0.5 | - |

(continued)

| | Positive electrode active material | | Non-aqueous electrolyte | | | |
|---|---|---|---|---|---|---|
| | composition | Particle form | Lithiu m salt ($LiPF_6$) Molar concen tratio n (M) | Organic solvent | Additive TMEB amoun t (wt%) | Additive [Form ula 2-1] amoun t (wt%) |
| Reference Example 3 | $LiNi_{0.86}Co_{0.08}Mn_{0.06}O_2$ | Secondary particle | 1.5 | EC:EMC (volume ratio 20:80) | - | 0.5 |
| Reference Example 4 | $LiNi_{0.86}Co_{0.08}Mn_{0.06}O_2$ | Secondary particle | 1.5 | EC:EMC (volume ratio 20:80) | 0.5 | 0.5 |

**Reference Experimental Example 1: Evaluation of High-temperature Life Characteristics**

That the lithium secondary batteries prepared in Reference Examples 1 to 4 were charged at 0.3 C to 4.2 V under a CC/CV condition at 45°C using an electrochemical charger/discharger at room temperature and then discharged at 0.3 C to 2.5 V under a CC condition was set as one cycle, 200 charge and discharge cycles were performed to evaluate capacity retention and resistance increase rate according to the following equations, and the results thereof are presented in [Table 4] below.

Capacity retention(%) = (discharge capacity after 200 cycles/discharge capacity after one cycle) × 100

Resistance increase rate(%) = (resistance after 200 cycles/resistance after one cycle) × 100

[Table 4]

| | Reference Experimental Example 1 (high-temperature life characteristics) | |
|---|---|---|
| | Capacity retention (%) | Resistance increase rate (%) |
| Reference Example 1 | 82 | 25 |
| Reference Example2 | 83 | 26 |
| Reference Example3 | 82 | 28 |
| Reference Example4 | 84 | 24 |

With respect to a high-nickel lithium composite transition metal oxide in which an amount of Ni among total metals excluding lithium in the lithium composite transition metal oxide is greater than 70 mol%, an inactive surface is created due to surface degradation (rock-salt degradation) caused by a phase structural change from H2 to H3 at the positive electrode as the voltage increases, and, as a result, performance is degraded to limit the operating voltage. Accordingly, it is difficult to achieve the effect of the present invention in which a positive electrode film is formed through the ring-opening reaction of the additive according to the present invention under high voltage conditions.

Thus, referring to Table 4, with respect to Reference Example 4 including the additive according to the present invention, it may be confirmed that an effect on high-temperature life characteristics was insignificant in comparison to that of Reference Example 1 not including an additive, Reference Example 2 using only the TMEB, and Reference Example 3 using only the compound of Formula 2-1.

Accordingly, it may be clearly understood that the effect of improving high-temperature life characteristics and high-temperature storage performance of the present invention, particularly, the effect of improving high-temperature life characteristics was achieved only when the non-aqueous electrolyte and the positive electrode active material according to the present invention rather than the high-nickel lithium composite transition metal oxide were combined.

## Claims

1. A lithium secondary battery comprising:

a positive electrode; a negative electrode facing the positive electrode; a separator disposed between the positive electrode and the negative electrode; and a non-aqueous electrolyte,
wherein the positive electrode comprises a positive electrode active material,
the positive electrode active material comprises a lithium nickel-based oxide particle represented by Formula A,
the lithium nickel-based oxide particle is in a form of a single particle composed of one single nodule or a pseudo-single particle that is a composite of 30 or less nodules, and
the non-aqueous electrolyte comprises a lithium salt, an organic solvent, and an additive,
wherein the additive comprises a cyclic borate-based compound represented by Formula 1; and a compound containing a propargyl group:

[Formula A] $Li_aNi_bCo_cMn_dM^1_eO_2$

wherein, in Formula A, $M^1$ is at least one selected from the group consisting of titanium (Ti), magnesium (Mg), aluminum (Al), zirconium (Zr), yttrium (Y), barium (Ba), calcium (Ca), strontium (Sr), tungsten (W), tantalum (Ta), niobium (Nb), and molybdenum (Mo), and $0.8 \le a \le 1.2$, $0.5 \le b < 0.7$, $0 < c < 0.2$, $0 < d \le 0.4$, $0 \le e \le 0.2$, and $b+c+d+e=1$, and

[Formula 1]

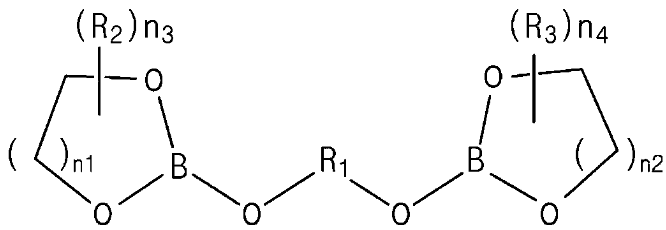

wherein, in Formula 1,
$R_1$ is an alkylene group having 1 to 10 carbon atoms,
$n_1$ and $n_2$ are each independently an integer selected from 0 to 5,
$R_2$ and $R_3$ are each independently hydrogen, halogen, a nitrile group, an ester group, an ether group, a ketone group, a carboxyl group, an unsubstituted or substituted alkyl group, an unsubstituted or substituted alkenyl group, an unsubstituted or substituted alkynyl group, an unsubstituted or substituted alkoxy group, a boron group, a borate group, an isocyanate group, an isothiocyanate group, a silyl group, a siloxane group, a sulfone group, a sulfonate group, a sulfate group, or a combination of two or more thereof,
$n_3$ is $2n_1 + 2$, and $n_4$ is $2n_2 + 2$,
when $n_3$ is an integer of 2 or more, a plurality of $R_2$s are identical or different from each other, and
when $n_4$ is an integer of 2 or more, a plurality of $R_3$s are identical or different from each other.

2. The lithium secondary battery of claim 1, wherein b/c of Formula A is in a range of 3.2 to 9.0.

3. The lithium secondary battery of claim 1, wherein b/d of Formula A is in a range of 1.5 to 2.8.

4. The lithium secondary battery of claim 1, wherein Formula A is represented by Formula A-1:

[Formula A-1] $Li_aNi_bCo_cMn_dM^1_eO_2$

wherein, in Formula A-1, $M^1$ is at least one selected from the group consisting of Ti, Mg, Al, Zr, Y, Ba, Ca, Sr, W, Ta, Nb, and Mo, and $0.8 \le a \le 1.2$, $0.55 \le b \le 0.65$, $0 < c \le 0.15$, $0.2 < d \le 0.4$, $0 \le e \le 0.1$, $3.2 \le b/c \le 9.0$, $1.5 \le b/d \le 2.8$, and $b+c+d+e=1$.

5. The lithium secondary battery of claim 1, wherein the compound represented by Formula 1 is a compound represented by Formula 1-1:

[Formula 1-1]

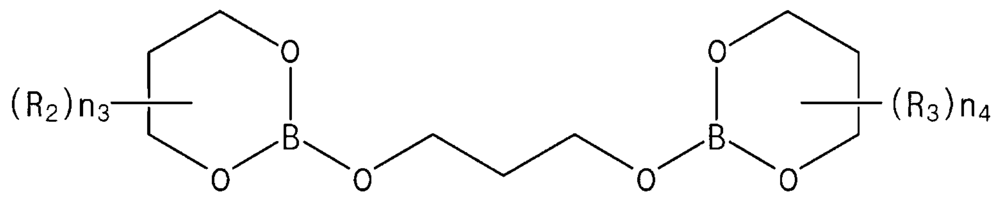

wherein, in [Formula 1-1] , $R_2$ and $R_3$ are each independently as defined in [Formula 1], $n_3$ is 6, and $n_4$ is 6.

6. The lithium secondary battery of claim 1, wherein the compound represented by Formula 1 is a compound represented by Formula 1-2:

[Formula 1-2]

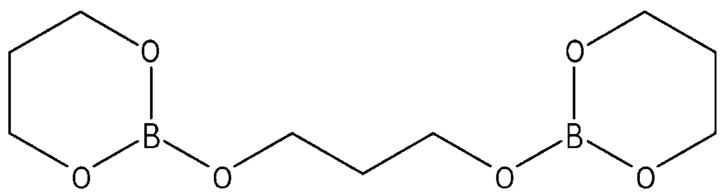

7. The lithium secondary battery of claim 1, wherein the compound containing a propargyl group comprises at least one selected from the group consisting of compounds represented by Formulae 2 and 3:

[Formula 2]

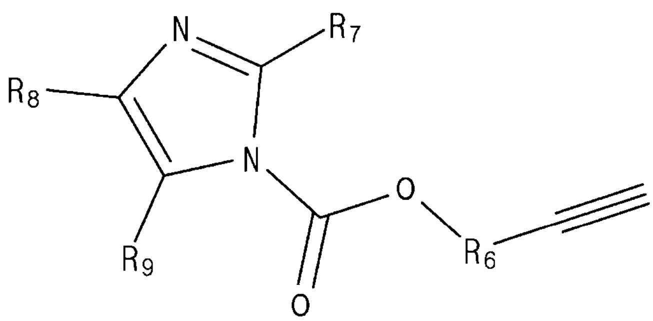

wherein, in Formula 2, $R_6$ is an alkylene group having 1 to 3 carbon atoms which is capable of being substituted with fluorine, and $R_7$ to $R_9$ are each independently hydrogen, an alkyl group having 1 to 3 carbon atoms, a nitrile group, or a combination of two or more thereof, and

[Formula 3]

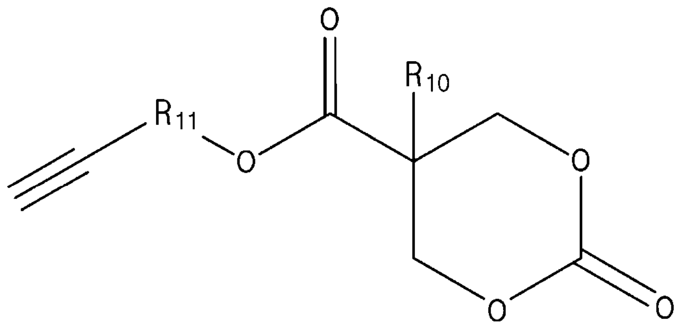

wherein, in Formula 3, $R_{10}$ is hydrogen, an alkyl group having 1 to 10 carbon atoms, a cycloalkyl group having 3 to 8 carbon atoms, or a combination of two or more thereof, and $R_{11}$ is an alkylene group having 1 to 8 carbon atoms which is capable of being substituted with fluorine.

8. The lithium secondary battery of claim 7, wherein the compound represented by Formula 2 is a compound represented by Formula 2-1:

[Formula 2-1]

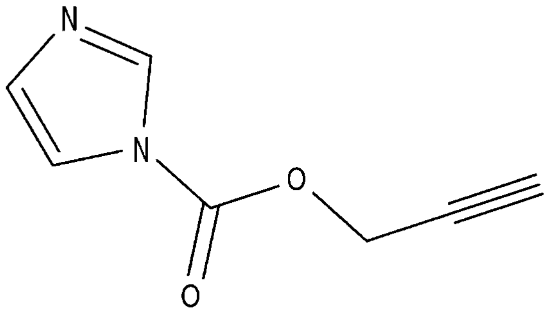

.

9. The lithium secondary battery of claim 7, wherein the compound represented by Formula 3 is a compound represented by Formula 3-1:

[Formula 3-1]

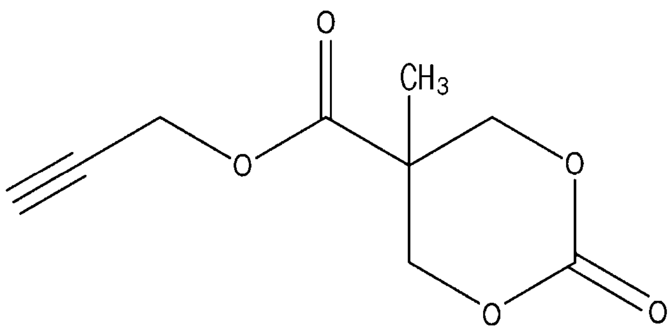

.

**10.** The lithium secondary battery of claim 1, wherein the cyclic borate-based compound is included in the non-aqueous electrolyte in an amount of 0.01 wt% to 12 wt% based on a total weight of the non-aqueous electrolyte.

**11.** The lithium secondary battery of claim 1, wherein the compound containing a propargyl group is included in the non-aqueous electrolyte in an amount of 0.01 wt% to 6 wt% based on a total weight of the non-aqueous electrolyte.

**12.** The lithium secondary battery of claim 1, wherein a weight ratio of the cyclic borate-based compound to the compound containing a propargyl group is in a range of 1:99 to 99:1.

**13.** The lithium secondary battery of claim 1, wherein an end-of-charge voltage during operation of the lithium secondary battery is 4.30 V or more.

## INTERNATIONAL SEARCH REPORT

International application No.
**PCT/KR2024/012740**

**A. CLASSIFICATION OF SUBJECT MATTER**

**H01M 10/052**(2010.01)i; **H01M 4/525**(2010.01)i; **H01M 4/505**(2010.01)i; **H01M 10/0567**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/052(2010.01); H01M 10/0567(2010.01); H01M 10/0568(2010.01); H01M 10/0569(2010.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차 전지(lithium secondary battery), 첨가제(additive), 환형 보레이트계 화합물(cyclic borate compound), 프로파질기(propargyl group)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0055990 A (LG ENERGY SOLUTION, LTD.) 26 April 2023 (2023-04-26)<br>See claims 1, 2 and 6-10; and paragraphs [0065]-[0080] and [0163]-[0169]. | 1-13 |
| Y | US 2016-0372789 A1 (WILDCAT DISCOVERY TECHNOLOGIES, INC.) 22 December 2016 (2016-12-22)<br>See claim 1; paragraph [0045]; and table 4. | 1-13 |
| Y | KR 10-2022-0165364 A (LG ENERGY SOLUTION, LTD.) 15 December 2022 (2022-12-15)<br>See claims 1 and 4; and paragraphs [0011] and [0014]. | 9 |
| A | KR 10-2019-0059256 A (LG CHEM, LTD.) 30 May 2019 (2019-05-30)<br>See claims 1, 5 and 9. | 1-13 |
| A | US 2020-0136183 A1 (NINGDE AMPEREX TECHNOLOGY LIMITED) 30 April 2020 (2020-04-30)<br>See claims 1-3, 10, 12 and 18. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 December 2024** | **11 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/012740**

| Patent document cited in search report | Publication date (day/month/year) | Patent family member(s) | Publication date (day/month/year) |
|---|---|---|---|
| KR 10-2023-0055990 A | 26 April 2023 | CN 117916924 A | 19 April 2024 |
| | | EP 4379890 A1 | 05 June 2024 |
| | | JP 2024-533403 A | 12 September 2024 |
| | | KR 10-2552706 B1 | 10 July 2023 |
| | | US 2023-0121761 A1 | 20 April 2023 |
| | | WO 2023-068807 A1 | 27 April 2023 |
| US 2016-0372789 A1 | 22 December 2016 | CN 108112276 A | 01 June 2018 |
| | | CN 108112276 B | 08 January 2021 |
| | | US 10978738 B2 | 13 April 2021 |
| | | US 2018-0159176 A1 | 07 June 2018 |
| | | US 9887434 B2 | 06 February 2018 |
| | | WO 2016-209841 A1 | 29 December 2016 |
| KR 10-2022-0165364 A | 15 December 2022 | CN 115803930 A | 14 March 2023 |
| | | EP 4123782 A1 | 25 January 2023 |
| | | EP 4123782 A4 | 27 December 2023 |
| | | EP 4123782 B1 | 09 October 2024 |
| | | JP 2023-534342 A | 09 August 2023 |
| | | KR 10-2722661 B1 | 29 October 2024 |
| | | US 11978856 B2 | 07 May 2024 |
| | | US 2024-0063435 A1 | 22 February 2024 |
| | | WO 2022-260222 A1 | 15 December 2022 |
| KR 10-2019-0059256 A | 30 May 2019 | CN 110998956 A | 10 April 2020 |
| | | CN 110998956 B | 10 December 2021 |
| | | EP 3648232 A1 | 06 May 2020 |
| | | EP 3648232 A4 | 12 August 2020 |
| | | EP 3648232 B1 | 12 April 2023 |
| | | JP 2020-528640 A | 24 September 2020 |
| | | JP 7027629 B2 | 02 March 2022 |
| | | KR 10-2167592 B1 | 19 October 2020 |
| | | US 11431028 B2 | 30 August 2022 |
| | | US 11799133 B2 | 24 October 2023 |
| | | US 2020-0251777 A1 | 06 August 2020 |
| | | US 2022-0376303 A1 | 24 November 2022 |
| | | WO 2019-103496 A1 | 31 May 2019 |
| US 2020-0136183 A1 | 30 April 2020 | CN 111106383 A | 05 May 2020 |
| | | CN 111106383 B | 18 May 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230118665